# EUROPEAN PATENT SPECIFICATION

(11) **EP 4 040 435 B1**
(45) Date of publication and mention of the grant of the patent: **17.01.2024**
(21) Application number: 21305164.2
(22) Date of filing: 05.02.2021
(51) Int. Cl.: G10L 17/18, G10L 17/04, H04M 3/56

(54) **METHOD AND SYSTEM FOR TELECONFERENCE ACTUAL PARTICIPANT RECOGNITION**
VERFAHREN UND SYSTEM ZUR ERKENNUNG DER TATSÄCHLICHEN TEILNEHMER EINER TELEKONFERENZ
PROCÉDÉ ET SYSTÈME DE RECONNAISSANCE RÉELLE DE PARTICIPANTS DE TÉLÉCONFÉRENCE

(43) Date of publication of application: 10.08.2022
(73) Proprietor: ALE International, 92700 Colombes (FR)
(72) Inventor: HELBERT, Emmanuel, 67140 Andlau (FR); WARICHET, Sebastien, 37270 Montlouis sur Loire (FR)
(74) Representative: BCF Global

(56) References cited:
- CN-A- 111 739 539
- GUPTA NAMAN ET AL: "Speaker Identification Based Proxy Attendance Detection System", 2019 INTERNATIONAL CONFERENCE ON SIGNAL PROCESSING AND COMMUNICATION (ICSC), IEEE, 7 March 2019 (2019-03-07), pages 175-179, XP033676759, ISBN: 978-1-5386-9435-0 [retrieved on 2019-12-20]

## Description

### FIELD

The present technology relates to information technology, more particularly to a method and system for recognition of an actual participant in a teleconference.

### BACKGROUND

Situations arise of participation in a conference through means of audio and/or video conferencing (teleconference). A participant in such a conference may be alone in a physical room, and calling in the conference using a personal user device, such as a computer or a handheld telephone. Alternatively the participant may share a physical room with other participants, using a group communication device, such as a computer or a desk phone using the loudspeaker, or a dedicated conference room solution.

Automatically detecting and recognizing a participant as an active speaker in such a conference is of particular interest when the video is not activated or not available. Systems have been devised to that effect based on Gaussian Mixture Model and Neural Networks. However such systems have been affected by one or more of the following drawbacks:
- relative lack of accuracy and replicability;
- model complexity inducing high computations times;
- lack of robustness and resilience.

There is therefore a need for a method and system that allows fast detection and recognition of a participant as an active speaker in a teleconference, in an efficient and resilient manner. Document from the 2019 International Conference on Signal Processing and Communication, IEEE, 7 March 2019, entitled "Speaker identification Based Proxy Attendance Detection System" by Gupta Naman et al., discloses a method for recognizing an actual participant in a classroom. China patent application CN111739539 published October 2, 2020, discloses a method and a device for determining the number of speakers in a target audio according to a target voiceprint feature connected graph.

Generally speaking, the present technology aims at detecting and recognizing an actual participant as an active speaker in a teleconference by training a system before the teleconference takes place, and creating a database of reference vectors representing the voice of candidate participants, then, while the teleconference takes place, comparing reference vectors with vectors representing the voice stream of actual participants. The system may use an encoder for calculating vectors from voice samples. The encoder may for example be a Convolutional Neural Network (CNN), undergoing a specific training.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches.

### SUMMARY

Embodiments of the present technology have been developed based on developers' appreciation of shortcomings associated with the prior art. The invention is specified by the independent claims. Further embodiments are specified in the dependent claims.

In the context of the present description, unless expressly provided otherwise, a system, may refer, but is not limited to, an "electronic device", an "operation system", a "computing system", a "computer-based system", a "controller unit", a "monitoring device", a "control device" and/or any combination thereof appropriate to the relevant task at hand.

In the context of the present specification, the expression "FPGA" is intended to include Field Programmable Gate Array computing systems, available on the market at the time of filing this patent application, such as references Xilinx VU9P, or Intel Stratix V, and any subsequent equivalent technologies becoming available, regardless of their name, consisting in computing system hardware programmable with software.

In the context of the present description, the expression "processor" in intended to include a single dedicated processor, a single shared processor, or a plurality of individual processors, some of which may be shared. In some aspects of the present technology, the processor may be for example a general purpose processor, such as a central processing unit (CPU), a processor dedicated to a specific purpose, or a processor implemented in a FPGA. Other hardware, conventional and/or custom, may also be included.

In the context of the present description, the functional steps shown in the figures, may be provided through the use of dedicated hardware, as well as hardware capable of executing software in association with appropriate software.

Still in the context of the present description, "a" computer-readable medium and "the" computer-readable medium should not be construed as being the same computer-readable medium. To the contrary, and whenever appropriate, "a" computer-readable medium and "the" computer-readable medium may also be construed as a first computer-readable medium and a second computer-readable medium.

In the context of the present description, unless expressly provided otherwise, the words "first", "second", "third", etc. have been used as adjectives only for the purpose of allowing for distinction between the nouns that they modify from one another, and not for the purpose of describing any particular relationship between those nouns.

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1a-1b depict an encoder under the form of a Convolutional Neural Network which may be used in the present technology;
Figure 2 details a training the encoder, that may be optional depending on the type of encoder used in the present technology;
Figure 3 details a training the system to adapt to a specific environment of candidate participants;
Figure 4 details the maintaining steps of a first database of reference vectors associated with candidate participants;
Figure 5 depicts the detecting and recognizing steps of an active speaker in an ongoing teleconference;
Figure 6 depicts a system according to the present technology; and
Figure 7 details a computing system that may be used in the present technology.

It should be noted that, unless otherwise explicitly specified herein, the drawings are not to scale. Further, elements that are identical from one figure to the next share the same reference numerals.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

It will be appreciated by those skilled in the art that any block diagrams herein represent conceptual views of illustrative circuitry embodying the present technology. Similarly, it will be appreciated that any flowcharts, flow diagrams, state transition diagrams, pseudo-code, and the like represent various processes that may be substantially represented in non-transitory computer-readable media and so executed by a computer or processor, whether or not such computer or processor is explicitly shown.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

With these fundamentals in place, we will now consider some non-limiting examples to illustrate various implementations of aspects of the present technology.

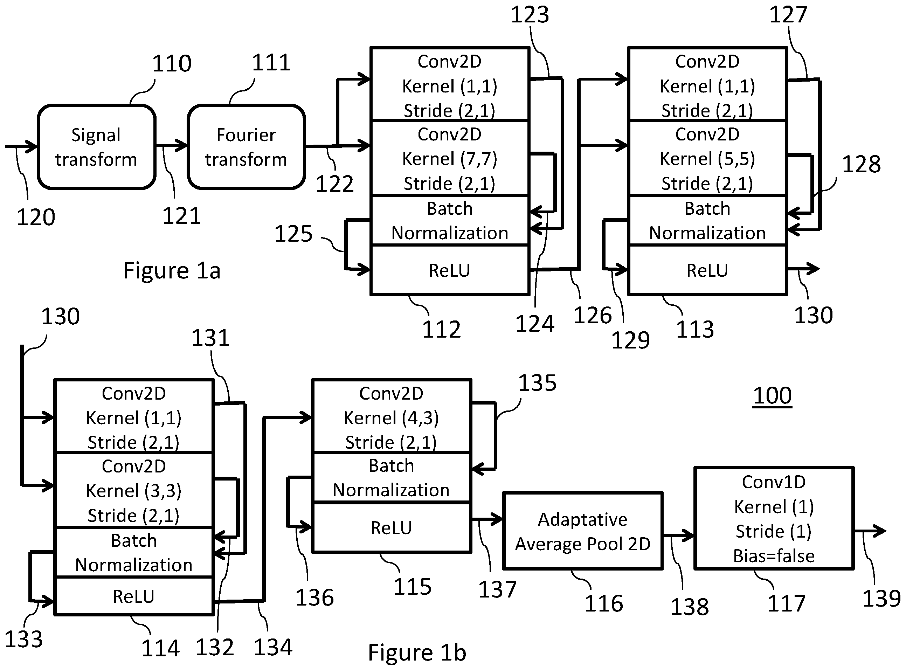

The present technology may in an embodiment involve a Convolutional Neural Network, CNN, as one possible encoder (ie: an entity that may calculate vectors from, and representing, voice samples), an architecture for which may be found as depicted Figures 1a-1b. The CNN may involve a Signal Transform function 110, a Fourier Transform function 111, four Convolutional layers 112-115, an Adaptative Average Pool 2D function 116, and a Convolutional layer 117. A voice sample may be input as reference 120, and a vector calculated from that voice sample output as reference 139.

The voice sample may be input 120 into the Signal Transform function 110. As will be appreciated by the skilled person, the goal is, at output 121, to block the direct component of the signal at 120, and to normalize signal values between -1 and +1. Output 121 may be made an input to Fourier Transform function 111. The goal here is, at output 122, to obtain 2D images representing the 1D voice sample signal.

These 2D images 122 may then be serially processed through four Convolutional layers 112-115, with each output of a layer (respectively 126, 130, 134 and 137) becoming an input for the next. For processing stabilization and convergence purposes, two parallel convolutions may be implemented in each of three 112-114 of the four Convolutional layers, with one of the two parallel convolutions having a Kernel (1,1). A choice may be made to have Kernel and Stride values of respectively: (1,1) and (2,1) in parallel with (7,7) and (2,1) for Convolutional layer 112, (1,1) and (2,1) in parallel with (5,5) and (2,1) for Convolutional layer 113, and (1,1) and (2,1) in parallel with (3,3) and (2,1) for Convolutional layer 114. Each of the outputs (respectively 123-124, 127-128, and 131-132 for the three 112-114 of the four Convolutional layers) of the two parallel convolutions may be fed into a BatchNormalization function, with the output of that function (respectively 125, 129 and 133) being fed to a ReLU (Rectified Linear Unit) function. The last 115 of the four Convolutional layers 112-115 may feature only one convolutional processing with a Kernel (4,3) and a Stride (2,1). The output of such processing 135, may be fed into a BatchNormalization function, with the output of that function 136 being fed to a ReLU function.

The output 137 of the Convolutional layer 115 may be fed into Adaptative Average Pool 2D function 116, which output 138 may be fed into 1D Convolutional layer 117. At this point, the output 139 of Convolutional layer 117 is of a vector best representing a person from which a voice sample was acquired and input at 120.

It will be apparent to the person skilled in the art that CNNs with an architecture other than as depicted Figure 1 in relation to CNN 100, may be used without affecting the generality of the teachings of the present disclosure. For example, the number of features, the Kernel size, the Stride or the number of blocks or layers of the CNN may be modified without departing from the scope of the present technology. It will be equally apparent to the person skilled in the art that according to the present technology an encoder other than a CNN may be used, even though the following description is presented using a CNN as encoder.

The present technology may in an embodiment involve training the CNN such as to encode voice samples with a view of performing speaker recognition. Training the CNN may involve a set of samples of voices from persons that may not necessarily be candidate or actual participants in a teleconference in which an active speaker is to be detected and recognized. The training may be performed only once in an embodiment of the present technology.

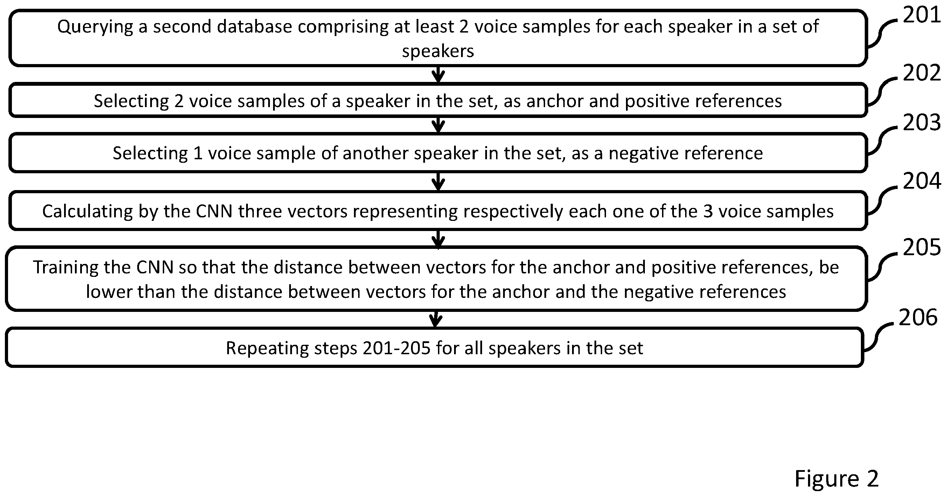

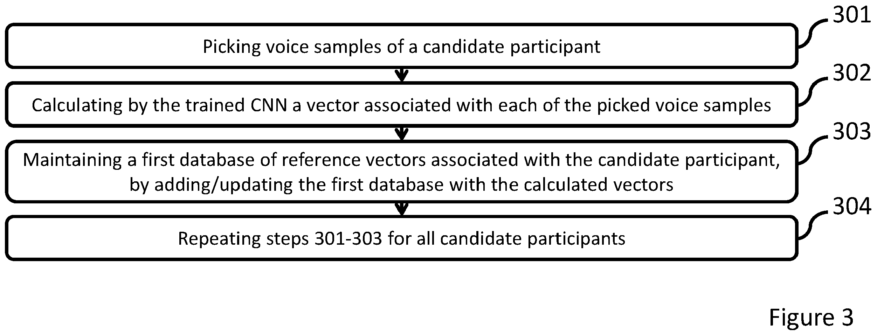

Figure 2 details a training the CNN in an embodiment of the present technology. At step 201, a second database (a first database is described below in relation to, in particular figure 3) may be queried containing at least 2 voice samples for each speaker in a set of speakers. Such a database may be built or procured in many different ways without affecting the generality of the teachings of the present disclosure. Voice samples may for example be recordings made "in presence" or during a call, or excerpts of recordings posted on social media, but both need to be recordings of the voice of the same person. The duration of the voice recordings may for example be at least approximately 3 seconds, such as to optimize CNN training from a duration and accuracy perspective, but other durations may be used. The set of speakers may for example include at least approximately 200 persons. The persons may or may not relate to candidate or actual participants in a teleconference in which an active speaker is to be detected and recognized. For example, they may be part of the same company, such as a company selling the present technology, or may be unrelated to the application of the present technology. For example, the second database may be procured from a provider of short clips of human speech, extracted from interview videos uploaded to YouTube (see for example: http://www.robots.ox.ac.uk/∼vgg/data/voxceleb/). In all cases, multiple languages may be represented throughout the voice samples.

At step 202, for a speaker in the set, 2, out of the at least 2 associated voice samples, may be selected (for example, without limitation, randomly). A first of the 2 selected voice samples may thus be labelled as "anchor reference" and a second of the 2 selected voice samples may be labelled as "positive reference".

At step 203, for another speaker in the set, 1, out of the at least 2 associated voice samples, may be selected (for example, without limitation, randomly), and may be labelled as "negative reference".

At step 204, the CNN may calculate a vector for each one of the 3 voice samples (anchor reference, positive reference, and negative reference).

At step 205, the CNN may be trained so that the distance between vectors for the anchor and positive references, be lower than the distance between vectors for the anchor and the negative references. As will be appreciated by the person skilled in the art, a distance between vectors throughout the present description may for example, without limitation, be a Euclidian distance.

At step 206, steps 201 to 205 may be repeated for all speakers in the set. At this point, training of the CNN may be considered to be sufficient.

It will be apparent to the person skilled in the art that other methods and techniques may be used in the training of the CNN without affecting the generality of the teachings of the present disclosure. For example, direct training techniques may be had through simple classification, or auto-encoders may be used. It will be equally apparent to the person skilled in the art that if an encoder is used, other than a CNN, the training, as described in relation to figure 2, may be inappropriate/non necessary.

The present technology may in an embodiment involve training a system using the CNN (or such other encoder), to adapt to a specific environment of candidate participants, among which an actual participant to a teleconference is to be recognized. It will be appreciated by the person skilled in the art that, even though the same terminology is used ("training") for the CNN and the system, the respective technical implications are quite different.

Figure 3 details a training the system in an embodiment of the present technology. The training of the system is performed during the solution deployment and operation, and aims at creating a pool of reference vectors of candidate participants in a teleconference in which an active speaker is to be detected and recognized.

To achieve that goal, in an embodiment of the present technology, at step 301, voice samples may be acquired of a candidate participant. This may be performed for example by acquiring such samples over a telephone conversation that the candidate participant may have with a third party. In an embodiment of the present technology, and in a corporate environment, an application may be developed and deployed internally so that employees of a company may provide voice samples, or a voice recording from which voice samples may be extracted, while using company communication means. In another embodiment, when a candidate participant is detected to have a one-on-one conversation using a communication mean, its speech may be intercepted and voice samples be extracted therefrom.

It will be apparent to the person skilled in the art that, in all such embodiments, the voice samples may be associated with an identification for the candidate participant. In a corporate environment where employees use corporate communication infrastructure, the identification of each employee is by default associated with communication means permitted to be used. Outside the corporate environment, identification of a candidate participant for which voice samples are gathered may be recovered in many different ways. For example, the candidate participant's identification may be present in a corporate contact directory, or the employee calling the candidate participant may be requested at the end of the call to provide the identification of the candidate participant.

The duration of the voice samples may for example be approximately 3 seconds, but other durations may be used. Attempts may be made to cap the processing load for example by:
- at least temporarily de-prioritizing (ie: delaying, or cancelling) in the training of the system, compared to other candidate participants, the candidate participants for which the CNN has already performed the training (ie: the second database already contains anchor and positive references for those participants);
- at least temporarily de-prioritizing in the training of the system, compared to other candidate participants, the candidate participants for which the pool of reference vectors has been "topped-up" (see below); and/or
- capping the number of simultaneous one-on-one conversations using a communication mean, being as the case may be monitored for speech interception and voice sample extraction.

At step 302, a vector may be calculated by the CNN having performed the training described in relation to figure 2, for each of the acquired voice samples.

At step 303, the calculated vectors are used to create and maintain, a first database of reference vectors, forming a pool of reference vectors for as many candidate participants as possible to a teleconference in which an active speaker is to be detected and recognized (step 304). The pool of reference vectors for each candidate participants may be limited in size, for example comprising 15 to 30 reference vectors, but other figure limits may be had. The maintaining of the first database may be through "topping-up" the pools of reference vectors up to the figure limit with newly calculated reference vectors, and/or maintaining the pool by replacing reference vectors present in the pool, by newly calculated ones that are deemed to be "better", as explained below, than the ones already present in the pool.

In an embodiment, a better vector is a vector having a short distance with the other vectors of the pool for the same candidate participant, whilst having a large, or larger, distance with the other vectors of the pools for other candidate participants.

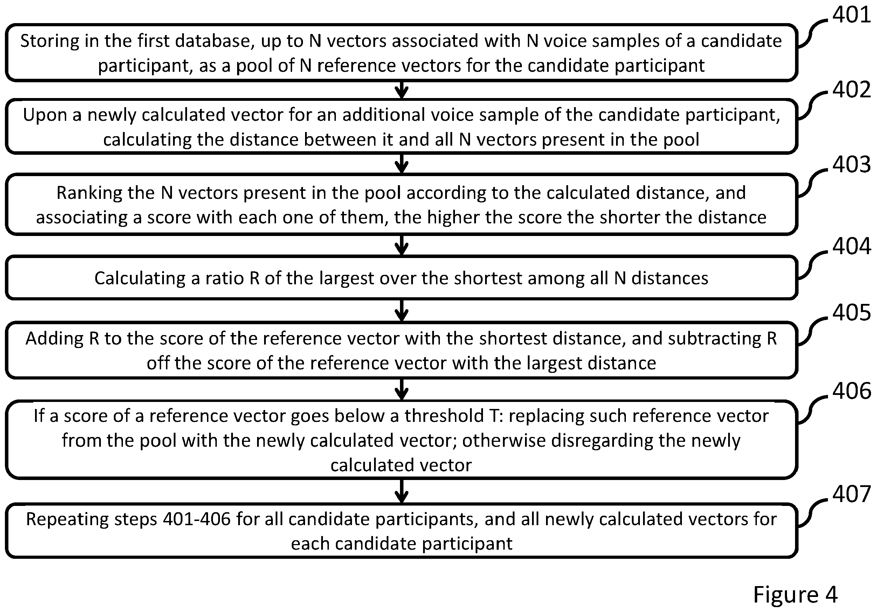

In an embodiment, the maintaining a first database of reference vectors associated with candidate participants, by adding/updating the first database with calculated vectors, as in step 303 above, is performed as follows, in relation to figure 4. At step 401, N (N >= 1) vectors associated with N voice samples of a candidate participant (which may for example be, without limitation, randomly selected), are stored in the first database as a pool of reference vectors for the one candidate participant. For example, without limitation, N may be comprised between 15 and 30, and may represent the maximum number of vectors in the pool.

If and when the pool is "topped-up" (the limit number N of reference vectors is reached), newly calculated vectors for additional voice samples above N of the same candidate participant may or may not replace one of the vectors already present in the pool, according to an election process. The election process aims at keeping the better vectors in the reference pool and eliminate other ones. Upon a newly calculated vector, the distance may be calculated at step 402 between such newly calculated vector and all N reference vectors present in the pool. N distances may thus be calculated.

At step 403, a score may be associated with each one of the N reference vectors. For example, a higher score may be associated with the reference vectors with the shortest distance with the newly calculated vector.

At step 404, a ratio R may be calculated, of the largest distance among the N calculated distances, over the shortest. At step 405, such ratio R may be added to the score of the reference vector among the N with the shortest distance with the newly calculated vector (ie: the reference vector with the highest score), and may be subtracted off the score of the reference vector among the N with the largest distance with the newly calculated vector (ie: the reference vector with the smallest score).

At step 406, if a reference vector score goes below a threshold T, such reference vector may be removed from the pool and replaced by the newly calculated vector. If not, the newly calculated vector may be disregarded, as in this case, the N better reference vectors for the candidate participant are already present in the pool.

At step 407, the process of steps 401-406 may be repeated for all candidate participants, and all newly calculated vectors for each candidate participant.

As will be apparent to the person skilled in the art:
- the highest score may instead be associated with the reference vector with the largest distance, the ratio R may be added to the score of the reference vector among the N with the largest distance with the newly calculated vector, and a reference vector may be removed from the pool if its score goes above a threshold T';
- at the outset, reference vectors may be given an initial score, for example 0 or such other initial value, determined including in relation to the value of the threshold T or T'.

This process in particular allows to eliminate calculated vectors which correspond to blank voice samples. It shows fast convergence, processing optimization, and rapid attainment of the best set of reference vectors for the reference pool of a candidate participant. The process may proceed including as a background task, even when the next phase, as described below, of detecting and recognizing an active speaker in a teleconference is performed.

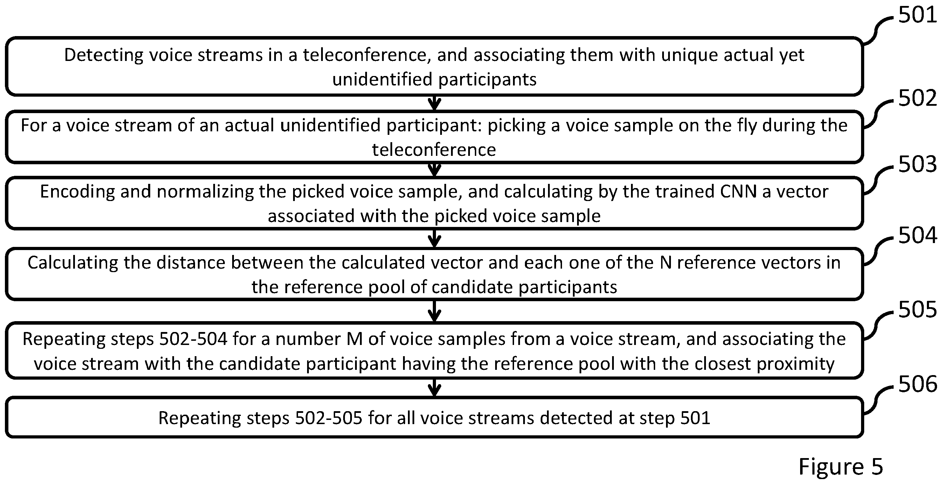

The detecting and recognizing an active speaker in an ongoing teleconference may be performed as depicted figure 5. At step 501, each voice stream in the teleconference, from which voice sample may be extracted, may be detected, and associated with a unique actual, yet unidentified, participant. As will be apparent to the person skilled in the art, this may be achieved in different ways. As an example, and without limitation, this may be achieved by association of voice streams with unique spatial locations in the teleconference, for example by triangulation of the delays of voice streams to reach 2 microphones physically set apart in a room. Each incoming voice stream may thus uniquely be associated with a spatial location in the room, such that several voice samples may be extracted from a voice stream that is known as coming from a single, yet unidentified, person.

At step 502, for a voice stream of an actual yet unidentified participant, a voice sample may be acquired on the fly during the teleconference. At step 503, the acquired voice sample may be normalized and encoded, and a vector calculated by the trained CNN, and associated with the acquired voice sample.

At step 504, the distance between the calculated vector and each one of the N reference vectors in the reference pools of candidate participants, may be calculated. In an embodiment, for processing efficiency, only the reference pools of candidate participants that are known to be involved in the teleconference are used. The knowledge of candidate participants that are actually participating in the conference may for example be acquired through the meeting invitation to the teleconference. In another embodiment, the reference pools of candidate participants that are known to be working closely with the people invited to the teleconference are used. This knowledge may for example be acquired by integrating the present technology with a human resources managing platform, not described here, such as SuccessFactors product from the company SAP.

At step 505, steps 502-504 may be repeated for a number M (M >= 1) of voice samples extracted from the same voice stream. In an embodiment, a value of M higher than or equal to 3 may be used. In a further embodiment, the voice samples have a duration of approximately 3 seconds. The voice stream of an actual participant may then be associated with the candidate participant having the reference pool with the closest proximity with the M calculated vectors for the voice samples. An active speaker is thus recognized through use of the present technology.

In an embodiment, the closest proximity may be determined, by:
- for a given acquired voice sample, and a given reference pool:
   - calculating the N distances between the vector calculated by the trained CNN, and associated with the acquired voice sample, and all N reference vectors forming the pool;
   - calculating the mean value of the shortest distances among the N calculated distances.

For example, without limitation, 4 shortest distances only may be considered;
- repeating the calculating above for all available reference pools; and
- associating the voice sample (and the voice stream from which it is extracted) with the candidate participant, as actual participant, having the reference pool with the lowest mean value.

In yet a further embodiment, M consecutive voice samples may be acquired from the voice stream. For example, without limitation, 3 consecutive voice samples may be acquired. the closest proximity may be determined, by:
- for a given acquired voice sample, and a given reference pool:
   - calculating the N distances between the vector calculated by the trained CNN, and associated with the acquired voice sample, and all N reference vectors forming the pool;
   - calculating the mean value of the P (P >= 1) shortest distances among the N calculated distances;
- repeating the calculating above for all M consecutive voice samples, and averaging the M mean values obtained;
- repeating the calculating above for all available reference pools; and
- associating the M voice samples (and the voice stream from which it is extracted) with the candidate participant, as actual participant, having the reference pool corresponding to the lowest average of the M mean values.

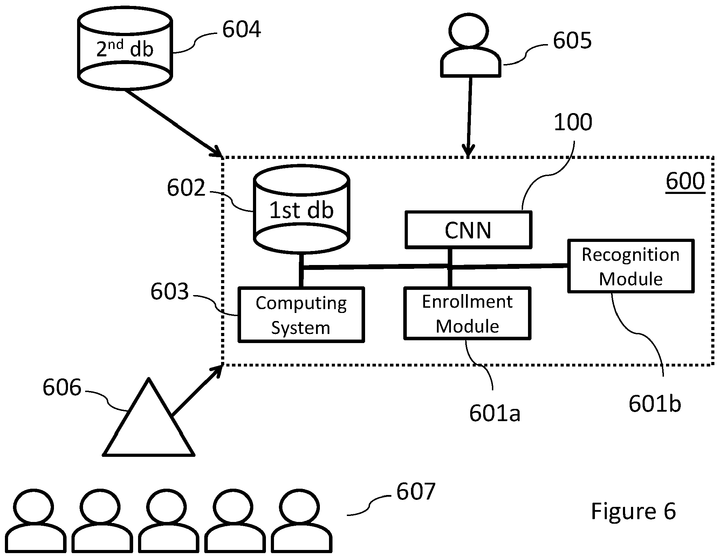

Figure 6 describes a system according to the present technology. A System 600 may comprise (whether or not embodied in a single product) the CNN 100 configured to interact with an Enrollment Module 601a, a Recognition Module 601b, a First Database 602, and a Computing System 603. The System 600 may be connected to a Second Database 604, at least a Candidate Participant 605, and a Teleconference System 606. Actual Participants 607 may attend a teleconference through the Teleconference System 606. The System 600 may be configured to receive voice samples from the Second Database 604 and from the Candidate Participant 605, and to receive voice streams (from which voice samples may be extracted) from the Teleconference System 606. The CNN 100 may be configured to calculate vectors from all such voice samples, as described above in relation to steps 204, 302, 402, 503. The Enrollment Module 601a may be configured to train the System 600 and to populate/maintain the First Database 602 with reference vectors for Candidate Participants 605, as described above in relation to steps 303-304 and 401-407. The Recognition Module 601b may be configured to detect and recognize actual speakers among Actual Participants 607, by comparing vectors calculated from voice samples extracted from voice streams provided by the Teleconference System 606, with reference vectors present in the First Database 602, as described above in relation to steps 504-506. The Computing System 603 may be configured to allow the performing of certain processing steps as described above, including calculating distances between vectors.

The Second Database 604 may contain voice samples from a set of speakers, that may be queried and selected by the System 600 as described above in relation to steps 201-203, and which may be used to train the CNN 100. The Candidate Participant 605 may provide voice samples acquired by the System 600 as described above in relation to step 301. The First Database 602 may be populated/maintained with reference vectors as described above in relation to steps 303, and 401-407. The Teleconference System 606 may provide voice streams as described above in relation to step 501.

In an embodiment, the Second Database 604 may be integrated in the System 600, and the System 600 be fed training voice samples from the internet or such other source, which are then stored in the Second Database 604. In another embodiment, part or all of the System 600 may be integrated into the Teleconference System 606.

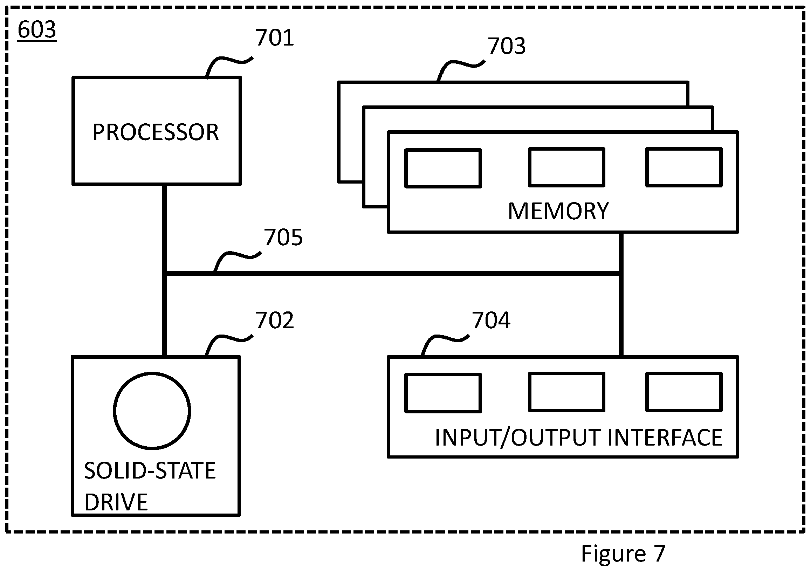

An example of implementation of the Computing System 603, without limitation, may be found in relation to Figure 7. As will be appreciated by the person skilled in the art, such computing system may be implemented in any other suitable hardware, software, and/or firmware, or a combination thereof, and may be a single physical entity, or several separate physical entities with a distributed functionality.

In some aspects of the present technology, the computing system 603 may comprise various hardware components including one or more single or multi-core processors collectively represented by a processor 701, a solid-state drive 702, a memory 703 and an input/output interface 704. In this context, the processor 701 may or may not be included in a FPGA. In some other aspects, the computing system 603 may be an "off the shelf' generic computing system. In some aspects, the computing system 603 may also be distributed amongst multiple systems. The computing system 603 may also be specifically dedicated to the implementation of the present technology. As a person in the art of the present technology may appreciate, multiple variations as to how the computing system 603 is implemented may be envisioned without departing from the scope of the present technology.

Communication between the various components of the computing system 603 may be enabled by one or more internal and/or external buses 705 (e.g. a PCI bus, universal serial bus, IEEE 1394 "Firewire" bus, SCSI bus, Serial-ATA bus, ARINC bus, etc.), to which the various hardware components are electronically coupled.

The input/output interface 704 may allow enabling networking capabilities such as wire or wireless access. As an example, the input/output interface 704 may comprise a networking interface such as, but not limited to, a network port, a network socket, a network interface controller and the like. Multiple examples of how the networking interface may be implemented will become apparent to the person skilled in the art of the present technology. According to implementations of the present technology, the solid-state drive 702 may store program instructions, such as those part of, for example, a library, an application, etc. suitable for being loaded into the memory 703 and executed by the processor 701 for the method and process steps according to the present technology.

## Claims

1. A method for recognizing an actual participant in a teleconference, among a set of candidate participants (605), comprising:
- training an encoder (100) used for calculating vectors, by, for all speakers in a set of speakers having at least two voice samples per speaker:
- selecting (202) a first and a second voice sample from the least two voice samples of a first speaker in the set of speakers;
- selecting (203) a third voice sample from the least two voice samples of a second speaker in the set of speakers;
- calculating (204) by the encoder (100) a first, second and third vectors for respectively the first, second and third selected voice samples; and
- training (205) the encoder (100) so that the distance between the first and second vectors be lower than the distance between the first and third vectors; and
- for each candidate participant in the set of candidate participants, associating a pool of N reference vectors associated with the candidate participant by:
- creating the pool of N reference vectors by acquiring (301) N voice samples from the candidate participant (605), and calculating (302) by the trained encoder a reference vector for each of the N acquired voice samples; and storing (303, 401) the pool of N reference vectors; and
- maintaining the created pool of N reference vectors by:
- acquiring (402) a N+1 voice sample from the candidate participant (605), and calculating (402) by the trained encoder a N+1 reference vector for the acquired voice sample;
- calculating (402) by the trained encoder the distance between each of the N reference vectors from the reference pool associated with the candidate participant, and the N+1 reference vector, and calculating (404) a ratio R of the largest over the shortest among all N calculated distances;
- ranking (403) in the reference pool the N reference vectors in the order of distance with the N+1 reference vector, and associating a score to each of them; and
- performing one of:
- adding (405) R to the score for the reference vector among the N reference vectors with the shortest distance with the N+1 reference vector, and subtracting R to the score for the reference vector among the N reference vectors with the largest distance with the N+1 reference vector, and if (406) one of the N scores goes below a threshold T for one of the N reference vectors, replacing in the reference pool that one vector with the N+1 reference vector, otherwise disregarding the N+1 reference vector; or
- adding (405) R to the score for the reference vector among the N reference vectors with the largest distance with the N+1 reference vector, and subtracting R to the score for the reference vector among the N reference vectors with the shortest distance with the N+1 reference vector, and if (406) one of the N scores goes above a threshold T' for one of the N reference vectors, replacing in the reference pool that one vector with the N+1 reference vector, otherwise disregarding the N+1 reference vector; and
- detecting (501) a voice stream in the teleconference (606);
- acquiring (502) M voice samples from the detected voice stream;
- normalizing (503) the M acquired voice samples, and calculating by the trained encoder a vector for each of the M normalized acquired voice samples;
- calculating (504) the distance between each of the M calculated vectors and each of the N reference vectors in the maintained pool of reference vectors associated with each candidate participants in the set of candidate participants; and
- associating (505) the voice stream with the candidate participant, as the actual participant in the teleconference, having the maintained pool of N reference vectors associated with it, with the closest proximity to the M calculated vectors;
wherein the encoder (100) is a Convolutional Neural Network, CNN.

2. The method of claim 1, wherein the set of speakers comprises at least approximately 200 speakers, and each of the at least two voice samples per speaker has a duration of at least approximately 3 seconds.

3. The method of any of the claims 1 to 2, wherein the N acquired voice samples have a duration of at least approximately 3 seconds.

4. The method of any of the claims 1 to 3, wherein the associating a pool of N reference vectors is de-prioritized for a given candidate participant compared to other candidate participants in the set, if the given candidate participant is also a speaker in the set of speakers.

5. The method of any of the claims 1 to 4, wherein the value of N is comprised between 15 and 30.

6. The method of any of the claims 1 to 5, wherein the value of M is higher or equal to 3.

7. The method of any of the claims 1 to 6, in which the M voice samples are consecutive, and further comprising:
- for each of the M calculated vectors, calculating the mean value of the P shortest distances among the N calculated distances with the reference vectors of a pool of reference vectors;
- averaging the M calculated mean values; and
- associating the voice stream with the candidate participant, as the actual participant in the teleconference, having the pool of reference vectors corresponding to the lowest average of M calculated mean values.

8. A system (600) for recognizing an actual participant in a teleconference, among a set of candidate participants (605), comprising an Encoder (100), a First Database (602), a Second Database (604), an Enrollment Module (601a), a Recognition Module (601b), and a Computing System (603), the system being configured to acquire voice samples from a candidate participant (605), to detect a voice stream from a Teleconference System (606) and to acquire voice samples from the detected voice stream;
- the Enrollment Module (601a) being configured to cause the system (600) to train by:
- causing the Encoder (100) to train by, for all speakers in a set of speakers having at least two voice samples per speaker stored in the Second Database (604):
- receiving the at least two voice samples from the Second Database (604);
- selecting (202) a first and a second voice sample from the least two voice samples of a first speaker in the set of speakers;
- selecting (203) a third voice sample from the least two voice samples of a second speaker in the set of speakers;
- calculating (204) a first, second and third vectors for respectively the first, second and third selected voice samples; and
- training (205) so that the distance between the first and second vectors be lower than the distance between the first and third vectors; and
- causing the trained Encoder (100) to associate a pool of N reference vectors with the candidate participant, by:
- creating the pool of N reference vectors by acquiring (301) N voice samples from the candidate participant (605), and calculating (302) a reference vector for each of the N acquired voice samples; and
- maintaining the created pool of N reference vectors by:
- acquiring (402) a N+1 voice sample from the candidate participant (605), and calculating (402) by the trained Encoder a N+1 reference vector for the acquired voice sample;
- calculating (402) by the trained Encoder the distance between each of the N reference vectors from the reference pool associated with the candidate participant, and the N+1 reference vector, and calculating (404) a ratio R of the largest over the shortest among all N calculated distances;
- ranking (403) in the reference pool the N reference vectors in the order of distance with the N+1 reference vector, and associating a score to each of them; and
- performing one of:
- adding (405) R to the score for the reference vector among the N reference vectors with the shortest distance with the N+1 reference vector, and subtracting R to the score for the reference vector among the N reference vectors with the largest distance with the N+1 reference vector, and if (406) one of the N scores goes below a threshold T for one of the N reference vectors, replacing in the reference pool that one vector with the N+1 reference vector, otherwise disregarding the N+1 reference vector; or
- adding (405) R to the score for the reference vector among the N reference vectors with the largest distance with the N+1 reference vector, and subtracting R to the score for the reference vector among the N reference vectors with the shortest distance with the N+1 reference vector, and if (406) one of the N scores goes above a threshold T' for one of the N reference vectors, replacing in the reference pool that one vector with the N+1 reference vector, otherwise disregarding the N+1 reference vector; and
- storing (303, 401) the maintained pool of N reference vectors in the First Database (602);
- the Recognition Module (601b) being configured to:
- normalize (503) M acquired voice samples from the detected voice stream, and cause the Encoder (100) to calculate a vector for each of the M normalized acquired voice samples;
- cause the Computing System (603) to calculate (504) the distance between each of the M calculated vectors and each of the N reference vectors, for maintained pools of reference vectors of candidate participants in the set of candidate participants; and
- associate (505) the voice stream with the candidate participant, as the actual participant in the teleconference, having the maintained pool of N reference vectors associated with it, with the closest proximity to the M calculated vectors;
wherein the Encoder (100) is a Convolutional Neural Network, CNN.

9. The system of claim 8, wherein the Second Database (604) is integrated into the system.

10. The system of any of the claims 8 to 9, wherein the Teleconference System (606) is integrated into the system.

11. A computer-readable medium comprising instructions causing to perform the method of any of the claims 1 to 7.

## Patentansprüche

1. Verfahren zum Erkennen eines tatsächlichen Teilnehmers in einer Telekonferenz innerhalb eines Satzes von Kandidaten-Teilnehmern (605), umfassend:
- Trainieren eines Encoders (100), der zum Berechnen von Vektoren verwendet wird, durch Folgendes für alle Sprecher in einem Satz von Sprechern, die mindestens zwei Sprachproben pro Sprecher aufweisen:
- Auswählen (202) einer ersten und einer zweiten Sprachprobe aus den mindestens zwei Sprachproben eines ersten Sprechers in dem Satz von Sprechern;
- Auswählen (203) einer dritten Sprachprobe aus den mindestens zwei Sprachproben eines zweiten Sprechers in dem Satz von Sprechern;
- Berechnen (204) eines ersten, zweiten und dritten Vektors für die erste, zweite beziehungsweise dritte ausgewählte Sprachprobe durch den Encoder (100); und
- Trainieren (205) des Encoders (100), sodass der Abstand zwischen dem ersten und zweiten Vektor kleiner als der Abstand zwischen dem ersten und dritten Vektor ist; und
- für jeden Kandidaten-Teilnehmer in dem Satz von Kandidaten-Teilnehmern Zuordnen eines Pools von N Referenzvektoren, die dem Kandidaten-Teilnehmer zugeordnet sind, durch:
- Erzeugen des Pools von N Referenzvektoren durch Erfassen (301) von N Sprachproben von dem Kandidaten-Teilnehmer (605), und Berechnen (302) eines Referenzvektors für jede der N erfassten Sprachproben durch den trainierten Encoder; und Speichern (303, 401) des Pools von N Referenzvektoren; und
- Pflegen des erzeugten Pools von N Referenzvektoren durch:
- Erfassen (402) einer N+1. Sprachprobe von dem Kandidaten-Teilnehmer (605) und Berechnen (402) eines N+1. Referenzvektors für die erfasste Sprachprobe durch den trainierten Encoder;
- Berechnen (402) des Abstands zwischen jedem der N Referenzvektoren aus dem Referenzpool, der dem Kandidaten-Teilnehmer zugeordnet ist, und dem N+1. Referenzvektor durch den trainierten Encoder, und Berechnen (404) eines Verhältnisses R des größten zu dem kürzesten Abstand innerhalb aller N berechneten Abstände;
- Ordnen (403) der N Referenzvektoren in dem Referenzpool nach der Reihenfolge des Abstands zu dem N+1. Referenzvektor und Zuordnen eines Scores zu jedem von ihnen; und
- Durchführen von einem der folgenden Schritte:
- Addieren (405) von R zu dem Score für den Referenzvektor innerhalb der N Referenzvektoren mit dem kürzesten Abstand zu dem N+1. Referenzvektor und Subtrahieren von R von dem Score für den Referenzvektor innerhalb der N Referenzvektoren mit dem größten Abstand zu dem N+1. Referenzvektor, und falls (406) einer der N Scores unter einen Schwellenwert T für einen der N Referenzvektoren sinkt, Ersetzen jenes einen Vektors durch den N+1. Referenzvektor in dem Referenzpool, ansonsten Nichtbeachten des N+1. Referenzvektors; oder
- Addieren (405) von R zu dem Score für den Referenzvektor innerhalb der N Referenzvektoren mit dem größten Abstand zu dem N+1. Referenzvektor und Subtrahieren von R von dem Score für den Referenzvektor innerhalb der N Referenzvektoren mit dem kürzesten Abstand zu dem N+1. Referenzvektor, und falls (406) einer der N Scores über einen Schwellenwert T' für einen der N Referenzvektoren steigt, Ersetzen jenes einen Vektors durch den N+1. Referenzvektor in dem Referenzpool, ansonsten Nichtbeachten des N+1. Referenzvektors; und
- Detektieren (501) eines Sprachstroms in der Telekonferenz (606);
- Erfassen (502) von M Sprachproben aus dem detektierten Sprachstrom;
- Normalisieren (503) der M erfassten Sprachproben und Berechnen eines Vektors für jede der M normalisierten erfassten Sprachproben durch den trainierten Encoder;
- Berechnen (504) des Abstands zwischen jedem der M berechneten Vektoren und jedem der N Referenzvektoren in dem gepflegten Pool von Referenzvektoren, der jedem Kandidaten-Teilnehmer in dem Satz der Kandidaten-Teilnehmer zugeordnet ist; und
- Zuordnen (505) des Sprachstroms zu dem Kandidaten-Teilnehmer als dem tatsächlichen Teilnehmer der Telekonferenz, dem der gepflegte Pool von N Referenzvektoren zugeordnet ist, der die nächste Nähe zu den M berechneten Vektoren aufweist;
wobei der Encoder (100) ein Convolutional Neural Network, CNN, ist.

2. Verfahren nach Anspruch 1, wobei der Satz von Sprechern mindestens ungefähr 200 Sprecher umfasst, und jede der mindestens zwei Sprachproben pro Sprecher eine Dauer von mindestens ungefähr 3 Sekunden aufweist.

3. Verfahren nach einem der Ansprüche 1 bis 2, wobei die N erfassten Sprachproben eine Dauer von mindestens ungefähr 3 Sekunden aufweisen.

4. Verfahren nach einem der Ansprüche 1 bis 3, wobei das Zuordnen eines Pools von N Referenzvektoren für einen gegebenen Kandidaten-Teilnehmer im Vergleich zu anderen Kandidaten-Teilnehmern in dem Satz depriorisiert wird, wenn der gegebene Kandidat-Teilnehmer auch ein Sprecher in dem Satz der Sprecher ist.

5. Verfahren nach einem der Ansprüche 1 bis 4, wobei der Wert von N zwischen 15 und 30 liegt.

6. Verfahren nach einem der Ansprüche 1 bis 5, wobei der Wert von M größer oder gleich 3 ist.

7. Verfahren nach einem der Ansprüche 1 bis 6, wobei die M Sprachproben aufeinander folgen, und ferner umfassend:
- für jeden der M berechneten Vektoren Berechnen des Mittelwerts der P kürzesten Abstände innerhalb der N berechneten Abstände zu den Referenzvektoren eines Pools von Referenzvektoren;
- Mitteln der M berechneten Mittelwerte; und
- Zuordnen des Sprachstroms zu dem Kandidaten-Teilnehmer als dem tatsächlichen Teilnehmer in der Telekonferenz, bei dem der Pool von Referenzvektoren dem niedrigsten Mittelwert von M berechneten Mittelwerten entspricht.

8. System (600) zum Erkennen eines tatsächlichen Teilnehmers in einer Telekonferenz innerhalb eines Satzes von Kandidaten-Teilnehmern (605), umfassend einen Encoder (100), eine erste Datenbank (602), eine zweite Datenbank (604), ein Anmeldemodul (601a), ein Erkennungsmodul (601b) und ein Computersystem (603), wobei das System konfiguriert ist, um Sprachproben von einem Kandidaten-Teilnehmer (605) zu erfassen, um einen Sprachstrom von einem Telekonferenzsystem (606) zu detektieren, und um Sprachproben aus dem detektierten Sprachstrom zu erfassen;
- das Anmeldemodul (601a) konfiguriert ist, um das System (600) zu veranlassen, durch Folgendes zu trainieren:
- Veranlassen, dass der Encoder (100) trainiert wird, indem für alle Sprecher in einem Satz von Sprechern, für die mindestens zwei Sprachproben pro Sprecher in der zweiten Datenbank (604) gespeichert sind, Folgendes ausgeführt wird:
- Empfangen der mindestens zwei Sprachproben von der zweiten Datenbank (604);
- Auswählen (202) einer ersten und einer zweiten Sprachprobe aus den mindestens zwei Sprachproben eines ersten Sprechers in dem Satz von Sprechern;
- Auswählen (203) einer dritten Sprachprobe aus den mindestens zwei Sprachproben eines zweiten Sprechers in dem Satz von Sprechern;
- Berechnen (204) eines ersten, zweiten und dritten Vektors für die erste, zweite beziehungsweise dritte ausgewählte Sprachprobe; und
- Trainieren (205), sodass der Abstand zwischen dem ersten und zweiten Vektor kleiner als der Abstand zwischen dem ersten und dritten Vektor ist; und
- Veranlassen, dass der trainierte Encoder (100) dem Kandidaten-Teilnehmer einen Pool von N Referenzvektoren zuordnet, durch:
- Erzeugen des Pools von N Referenzvektoren durch Erfassen (301) von N Sprachproben von dem Kandidaten-Teilnehmer (605) und Berechnen (302) eines Referenzvektors für jede der N erfassten Sprachproben; und
- Pflegen des erzeugten Pools von N Referenzvektoren durch:
- Erfassen (402) einer N+1. Sprachprobe von dem Kandidaten-Teilnehmer (605) und Berechnen (402) eines N+1. Referenzvektors für die erfasste Sprachprobe durch den trainierten Encoder;
- Berechnen (402) des Abstands zwischen jedem der N Referenzvektoren aus dem Referenzpool, der dem Kandidaten-Teilnehmer zugeordnet ist, und dem N+1. Referenzvektor durch den trainierten Encoder und Berechnen (404) eines Verhältnisses R des größten zu dem kürzesten Abstand innerhalb von allen N berechneten Abständen;
- Ordnen (403) der N Referenzvektoren in dem Referenzpool nach der Reihenfolge des Abstands zu dem N+1. Referenzvektor und Zuordnen eines Scores zu jedem von ihnen; und
- Durchführen von einem der folgenden Schritte:
- Addieren (405) von R zu dem Score für den Referenzvektor innerhalb der N Referenzvektoren mit dem kürzesten Abstand zu dem N+1. Referenzvektor und Subtrahieren von R von dem Score für den Referenzvektor innerhalb der N Referenzvektoren mit dem größten Abstand zu dem N+1. Referenzvektor, und falls (406) einer der N Scores unter einen Schwellenwert T für einen der N Referenzvektoren sinkt, Ersetzen jenes einen Vektors durch den N+1. Referenzvektor in dem Referenzpool, ansonsten Nichtbeachten des N+1. Referenzvektors; oder
- Addieren (405) von R zu dem Score für den Referenzvektor innerhalb der N Referenzvektoren mit dem größten Abstand zu dem N+1. Referenzvektor und Subtrahieren von R von dem Score für den Referenzvektor innerhalb der N Referenzvektoren mit dem kürzesten Abstand zu dem N+1. Referenzvektor, und falls (406) einer der N Scores über einen Schwellenwert T' für einen der N Referenzvektoren steigt, Ersetzen jenes einen Vektors durch den N+1. Referenzvektor in dem Referenzpool, ansonsten Nichtbeachten des N+1. Referenzvektors; und
- Speichern (303, 401) des gepflegten Pools von N Referenzvektoren in der ersten Datenbank (602);
- wobei das Erkennungsmodul (601b) konfiguriert ist zum:
- Normalisieren (503) von M erfassten Sprachproben aus dem detektierten Sprachstrom und Veranlassen, dass der Encoder (100) einen Vektor für jede der M normalisierten erfassten Sprachproben berechnet;
- Veranlassen, dass das Computersystem (603) für gepflegte Pools von Referenzvektoren von Kandidaten-Teilnehmern in dem Satz von Kandidaten-Teilnehmern den Abstand zwischen jedem der M berechneten Vektoren und jedem der N Referenzvektoren berechnet (504); und
- Zuordnen (505) des Sprachstroms zu dem Kandidaten-Teilnehmer als dem tatsächlichen Teilnehmer in der Telekonferenz, dem der gepflegte Pool von N Referenzvektoren zugeordnet ist, der die nächste Nähe zu den M berechneten Vektoren aufweist;
wobei der Encoder (100) ein Convolutional Neural Network, CNN, ist.

9. System nach Anspruch 8, wobei die zweite Datenbank (604) in das System integriert ist.

10. System nach einem der Ansprüche 8 bis 9, wobei das Telekonferenzsystem (606) in das System integriert ist.

11. Computerlesbares Medium, das Anweisungen umfasst, die veranlassen, dass das Verfahren gemäß einem der Ansprüche 1 bis 7 durchgeführt wird.

## Revendications

1. Procédé de reconnaissance d'un participant réel à une téléconférence, parmi un ensemble de participants candidats (605), comprenant :
- l'entraînement d'un encodeur (100) utilisé pour le calcul de vecteurs, par, pour tous les locuteurs d'un ensemble de locuteurs ayant au moins deux échantillons vocaux par locuteur :
- la sélection (202) d'un premier et d'un deuxième échantillon vocal parmi les au moins deux échantillons vocaux d'un premier locuteur dans l'ensemble de locuteurs ;
- la sélection (203) d'un troisième échantillon vocal parmi les au moins deux échantillons vocaux d'un second locuteur dans l'ensemble de locuteurs ;
- le calcul (204) par l'encodeur (100) d'un premier, d'un deuxième et d'un troisième vecteurs pour respectivement les premier, deuxième et troisième échantillons vocaux sélectionnés ; et
- l'entraînement (205) de l'encodeur (100) de sorte que la distance entre les premier et deuxième vecteurs soit inférieure à la distance entre les premier et troisième vecteurs ; et
- pour chaque participant candidat de l'ensemble des participants candidats, l'association d'un pool de N vecteurs de référence associés au participant candidat par :
- la création du pool de N vecteurs de référence par l'acquisition (301) de N échantillons vocaux du participant candidat (605), et le calcul (302) par l'encodeur entraîné d'un vecteur de référence pour chacun des N échantillons vocaux acquis ; et le stockage (303, 401) du pool de N vecteurs de référence ; et
- le maintien du pool créé de N vecteurs de référence par :
- l'acquisition (402) d'un N+1 échantillon vocal du participant candidat (605), et le calcul (402) par l'encodeur entraîné d'un N+1 vecteur de référence pour l'échantillon vocal acquis ;
- le calcul (402) par l'encodeur entraîné de la distance entre chacun des N vecteurs de référence du pool de référence associé au participant candidat, et le N+1 vecteur de référence, et le calcul (404) d'un rapport R de la plus grande sur la plus courte parmi toutes les N distances calculées ;
- le classement (403) dans le pool de référence des N vecteurs de référence dans l'ordre de distance avec le N+1 vecteur de référence, et l'association d'un score à chacun d'eux ; et
- l'exécution de l'une des opérations suivantes :
- l'ajout (405) de R au score du vecteur de référence parmi les N vecteurs de référence de plus courte distance avec le N+1 vecteur de référence, et la soustraction de R au score du vecteur de référence parmi les N vecteurs de référence de plus grande distance avec le N+1 vecteur de référence, et si (406) l'un des N scores passe en dessous d'un seuil T pour l'un des N vecteurs de référence, le remplacement dans le pool de référence de ce vecteur par le N+1 vecteur de référence, sinon l'abstraction du N+1 vecteur de référence ; ou
- l'ajout (405) de R au score du vecteur de référence parmi les N vecteurs de référence de plus grande distance avec le N+1 vecteur de référence, et la soustraction de R au score du vecteur de référence parmi les N vecteurs de référence de plus courte distance avec le N+1 vecteur de référence, et si (406) l'un des N scores passe au-dessus d'un seuil T' pour l'un des N vecteurs de référence, le remplacement dans le pool de référence de ce vecteur par le N+1 vecteur de référence, sinon l'abstraction du N+1 vecteur de référence ; et
- la détection (501) d'un flux vocal dans la téléconférence (606) ;
- l'acquisition (502) de M échantillons vocaux à partir du flux vocal détecté ;
- la normalisation (503) des M échantillons vocaux acquis, et le calcul par l'encodeur entraîné d'un vecteur pour chacun des M échantillons vocaux acquis normalisés ;
- le calcul (504) de la distance entre chacun des M vecteurs calculés et chacun des N vecteurs de référence dans le pool maintenu de vecteurs de référence associés à chaque participant candidat de l'ensemble de participants candidats ; et
- l'association (505) du flux vocal au participant candidat, en tant que participant réel à la téléconférence, auquel est associé le pool maintenu de N vecteurs de référence, avec la plus proche proximité des M vecteurs calculés ;
dans lequel l'encodeur (100) est un réseau neuronal convolutif, CNN.

2. Procédé selon la revendication 1, dans lequel l'ensemble de locuteurs comprend au moins environ 200 locuteurs, et chacun des au moins deux échantillons vocaux par locuteur a une durée d'au moins environ 3 secondes.

3. Procédé selon l'une quelconque des revendications 1 et 2, dans lequel les N échantillons vocaux acquis ont une durée d'au moins environ 3 secondes.

4. Procédé selon l'une quelconque des revendications 1 à 3, dans lequel l'association d'un pool de N vecteurs de référence est dépriorisée pour un participant candidat donné par rapport à d'autres participants candidats de l'ensemble, si le participant candidat donné est également un locuteur de l'ensemble de locuteurs.

5. Procédé selon l'une quelconque des revendications 1 à 4, dans lequel la valeur de N est comprise entre 15 et 30.

6. Procédé selon l'une quelconque des revendications 1 à 5, dans lequel la valeur de M est supérieure ou égale à 3.

7. Procédé selon l'une quelconque des revendications 1 à 6, dans lequel les M échantillons vocaux sont consécutifs, et comprenant en outre :
- pour chacun des M vecteurs calculés, le calcul de la valeur moyenne des P distances les plus courtes parmi les N distances calculées avec les vecteurs de référence d'un pool de vecteurs de référence ;
- la moyenne des M valeurs moyennes calculées ; et
- l'association du flux vocal au participant candidat, en tant que participant réel à la téléconférence, ayant le pool de vecteurs de référence correspondant à la moyenne la plus basse de M valeurs moyennes calculées.

8. Système (600) de reconnaissance d'un participant réel à une téléconférence, parmi un ensemble de participants candidats (605), comprenant un encodeur (100), une première base de données (602), une seconde base de données (604), un module d'inscription (601a), un module de reconnaissance (601b) et un système informatique (603), le système étant configuré pour acquérir des échantillons vocaux d'un participant candidat (605), pour détecter un flux vocal d'un système de téléconférence (606) et pour acquérir des échantillons vocaux du flux vocal détecté ;
- le module d'inscription (601a) étant configuré pour amener le système (600) à s'entraîner par :
- le fait d'amener l'encodeur (100) à s'entraîner par, pour tous les locuteurs d'un ensemble de locuteurs ayant au moins deux échantillons vocaux par locuteur stockés dans la seconde base de données (604) :
- la réception des au moins deux échantillons vocaux de la seconde base de données (604) ;
- la sélection (202) d'un premier et d'un deuxième échantillons vocaux parmi les au moins deux échantillons vocaux d'un premier locuteur dans l'ensemble de locuteurs ;
- la sélection (203) d'un troisième échantillon vocal parmi les au moins deux échantillons vocaux d'un second locuteur dans l'ensemble de locuteurs ;
- le calcul (204) d'un premier, d'un deuxième et d'un troisième vecteurs pour respectivement les premier, deuxième et troisième échantillons vocaux sélectionnés ; et
- l'entraînement (205) de sorte que la distance entre les premier et deuxième vecteurs soit inférieure à la distance entre les premier et troisième vecteurs ; et
- le fait d'amener l'encodeur entraîné (100) à associer un pool de N vecteurs de référence au participant candidat, par :
- la création du pool de N vecteurs de référence par l'acquisition (301) de N échantillons vocaux auprès du participant candidat (605), et le calcul (302) d'un vecteur de référence pour chacun des N échantillons vocaux acquis ; et
- le maintien du pool créé de N vecteurs de référence par :
- l'acquisition (402) d'un N+1 échantillon vocal du participant candidat (605), et le calcul (402) par l'encodeur entraîné d'un N+1 vecteur de référence pour l'échantillon vocal acquis ;
- le calcul (402) par l'encodeur entraîné de la distance entre chacun des N vecteurs de référence du pool de référence associé au participant candidat, et le N+1 vecteur de référence, et le calcul (404) d'un rapport R de la plus grande sur la plus courte parmi toutes les N distances calculées ;
- le classement (403) dans le pool de référence des N vecteurs de référence dans l'ordre de distance avec le N+1 vecteur de référence, et l'association d'un score à chacun d'eux ; et
- l'exécution de l'une des opérations suivantes :
- l'ajout (405) de R au score du vecteur de référence parmi les N vecteurs de référence de plus courte distance avec le N+1 vecteur de référence, et la soustraction de R au score du vecteur de référence parmi les N vecteurs de référence de plus grande distance avec le N+1 vecteur de référence, et si (406) l'un des N scores passe au-dessus d'un seuil T pour l'un des N vecteurs de référence, le remplacement dans le pool de référence de ce vecteur par le N+1 vecteur de référence, sinon l'abstraction du N+1 vecteur de référence ; ou
- l'ajout (405) de R au score du vecteur de référence parmi les N vecteurs de référence de plus grande distance avec le N+1 vecteur de référence, et la soustraction de R au score du vecteur de référence parmi les N vecteurs de référence de plus courte distance avec le N+1 vecteur de référence, et si (406) l'un des N scores passe au-dessus d'un seuil T' pour l'un des N vecteurs de référence, le remplacement dans le pool de référence de ce vecteur par le N+1 vecteur de référence, sinon l'abstraction du N+1 vecteur de référence ; et
- le stockage (303, 401) du pool maintenu de N vecteurs de référence dans la première base de données (602) ;
- le module de reconnaissance (601b) étant configuré pour :
- normaliser (503) M échantillons vocaux acquis à partir du flux vocal détecté, et amener l'encodeur (100) à calculer un vecteur pour chacun des M échantillons vocaux acquis normalisés ;
- amener le système informatique (603) à calculer (504) la distance entre chacun des M vecteurs calculés et chacun des N vecteurs de référence, pour des pools maintenus de vecteurs de référence de participants candidats dans l'ensemble de participants candidats ; et
- associer (505) le flux vocal au participant candidat, en tant que participant réel à la téléconférence, auquel est associé le pool maintenu de N vecteurs de référence, avec la plus proche proximité des M vecteurs calculés ;
dans lequel l'encodeur (100) est un réseau neuronal convolutif, CNN.

9. Système selon la revendication 8, dans lequel la seconde base de données (604) est intégrée au système.

10. Système selon l'une quelconque des revendications 8 et 9, dans lequel le système de téléconférence (606) est intégré au système.

11. Support lisible par ordinateur comprenant des instructions amenant l'exécution du procédé selon l'une quelconque des revendications 1 à 7.
